# EUROPÄISCHE PATENTSCHRIFT

(11) **EP 1 894 699 B1**
(45) Veröffentlichungstag und Bekanntmachung des Hinweises auf die Patenterteilung: **27.02.2013**
(21) Anmeldenummer: 07017053.5
(22) Anmeldetag: 31.08.2007
(51) Int. Cl.: B29C 45/64

(54) **Schliesseinheit**
Clamping unit
Unité de verrouillage

(30) Priorität: 31.08.2006 AT 14482006; 20.04.2007 AT 6152007
(43) Veröffentlichungstag der Anmeldung: 05.03.2008
(73) Patentinhaber: ENGEL AUSTRIA GmbH, 4311 Schwertberg (AT)
(72) Erfinder: Lampl, Alfred, 4311 Schwertberg (AT)
(74) Vertreter: Gangl, Markus

(56) Entgegenhaltungen:
- EP-A- 0 420 098
- DE-A1- 4 227 031
- FR-A- 1 564 985
- JP-A- 8 066 950

## Beschreibung

Die Erfindung bezieht sich auf eine Schließeinheit einer Spritzgießmaschine oder Druckgussmaschine mit einem am Maschinenrahmen feststehenden Werkzeugträger und einem bewegbaren Werkzeugträger, der von einem Elektromotor über ein Antriebsspindel-Mutternsystem verschoben wird. Die für den Einspritzvorgang notwendige Zuhaltekraft der Werkzeughälften wird durch ein Spannkeilsystem erreicht, das auf dem feststehenden Werkzeugträger montiert ist und verhindert, dass der bewegbare Werkzeugträger durch die beim Einspritzen in das geschlossene Werkzeug entstehende Auftriebskraft in Richtung der Maschinenachse verschoben wird.

Aus der DE 42 27 031 A1 ist eine Gießanlage bekannt, bei der die Formhälften durch Verriegelungselemente zusammen gehalten werden können, welche eine feste Verbindung für die beiden Formhälften während des Füllvorganges bewirken.

Stand der Technik sind Zweiplatten-Schließeinheiten, bei denen meistens vier hydraulische Druckkissen auf der feststehenden Werkzeugaufspannplatte montiert sind und die Kolben der Hydraulikeinheit mit den Holmen verbunden sind. Die Schließkraft wird durch die Hydraulikeinheiten erzeugt und wirkt über die Holme auf die bewegbare Werkzeugaufspannplatte und das Werkzeug. Durch den Aufbau der Schließkraft wird verhindert, dass beim Einspritzen das Werkzeug geöffnet wird und am Spritzgussteil ein Grat gebildet wird.

Aufgabe der Erfindung ist es, eine Schließeinheit ohne Holme zu schaffen, bei der die beiden Werkzeugträger nach dem Schließen ohne Holme verriegelt und mit der unterschiedliche Werkzeughöhen ausgeglichen werden können. Diese Aufgabe wird durch eine Schließeinheit mit den Merkmalen des Anspruchs 1 gelöst.

Die Werkzeugträger mit den Werkzeugen werden gegeneinander verspannt und dadurch die Gratbildung beim Einspritzen verhindert. Die starre Konstruktion von Werkzeugträger und Keilspannsystem verhindert auch bei maximaler Antriebskraft (max. projizierte Formteilfläche x max. Spritzdruck) das Öffnen des Werkzeuges und damit die Gratbildung. Die Spannkeile werden entweder durch einen Hydraulikzylinder oder durch eine elektrisch angetriebene Spindel-Mutterneinheit bewegt. Eine weitere Möglichkeit ist, die Spannkeile durch die Schließbewegung des bewegbaren Formträgers zu verspannen. Durch das vorliegende Schließsystem kann ein Teil der Energie, die bei üblichen Schließsystemen zum Aufbau der Schließkraft erforderlich ist, eingespart werden.

Die Erfindung wird nachfolgend anhand einer schematischen Zeichnung, die den wesentlichen Aufbau des Schließsystems zeigt, dargestellt und beschrieben.
- Fig. 1: zeigt den schematischen Aufbau der Schließeinheit mit Spannkeilsystem,
- Fig. 2: zeigt eine Ansicht des bewegbaren Werkzeugträgers,
- Fig. 3: zeigt den Unterschied der Verformungen einer Schließeinheit mit Holmen und einer Schließeinheit mit Spannkeilsystemen,
- Fig. 4: zeigt den schematischen Aufbau des Grundrisses einer Schließeinheit mit Spannkeilsystemen, bei der der Verspannvorgang durch die Bewegung des bewegbaren Werkzeugträgers erfolgt,
- Fig. 5: zeigt den schematischen Aufbau der Ansicht der Schließeinheit mit dem Verspannsystem durch die Bewegung des bewegbaren Werkzeugträgers, und
- Fig. 6: zeigt den schematischen Aufbau des Grundrisses einer konstruktiv anderen Schließeinheit mit Spannkeilsystern.

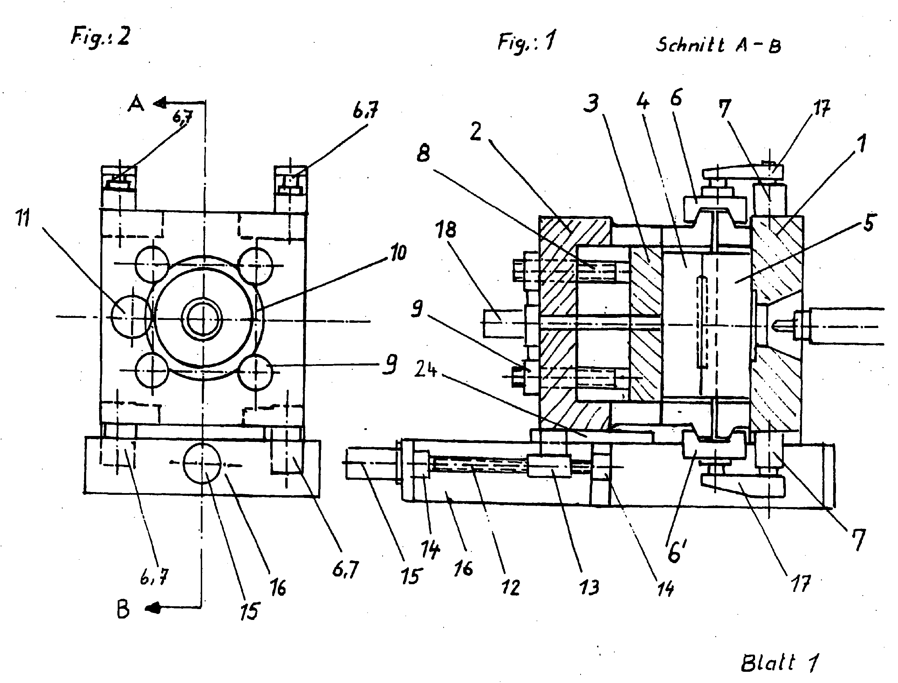

In den Fig. 1 und 2 ist der feststehende Werkzeugträger 1 am Maschinenrahmen 16 befestigt, der bewegbare Werkzeugträger 2 ist am Rahmen 16 auf einer Gleitführung 24 gelagert. Die Fahrbewegung des bewegbaren Werkzeugträgers 2 erfolgt über die Mutter 13 durch Rotation der Antriebsspindel 12, die durch die Lager 14 mit dem Maschinenrahmen 16 verbunden ist und vom Getriebemotor angetrieben wird.

Nach der Schließbewegung des Werkzeugträgers 2 werden durch den Spannkeil 6 mit einer vorgegebenen Spannkraft die Werkzeughälften 4, 5 aneinander gepresst. Die Bewegung des Spannkeiles 6 wird durch die hydraulisch betriebene Zylinder-Kolbeneinheit 7 oder eine mit Getriebemotor angetriebene Mutter-Spindeleinheit über den Spannarm 17 durchgeführt. Meistens sind vier Spannkeilsysteme vorgesehen, mindestens aber zwei. Der Spannkeil 6 umschließt die keilförmigen Flächen an den Werkzeugträgern 1, 2. Im bewegbaren Werkzeugträger 2 ist eine verschiebbare Aufspannplatte 3 gelagert, mit der unterschiedliche Werkzeughöhen ausgeglichen werden. Das Verschieben der Aufspannplatte 3 wird mit den Gewindespindeln 8, den verzahnten Muttern 9, dem Sonnenrad 10 und dem Motor 11 mit Antriebsritzel durchgeführt. Im Zentrum des bewegbaren Werkzeugträgers 2 ist ein hydraulisch oder elektrisch angetriebener Auswerfer 18 vorgesehen.

Wesentlich ist, dass der Spannkeil 6, der feststehende und bewegbare Werkzeugträger 1, 2 mit den angegossenen Keilflächen, die Gewindespindeln 8 und die Aufspannplatte 3 so dimensioniert sind, dass beim Einspritzen durch die Auftriebskraft nur eine unwesentliche Verformung in axialer Richtung der Maschine auftritt und eine Gratbildung am Spritzgussteil vermieden wird. Das Aufbringen einer großen Schließkraft, wie bei Spritzgießmaschinen mit Holmen, ist dann nicht notwendig, daher ist eine Energieeinsparung vorhanden.

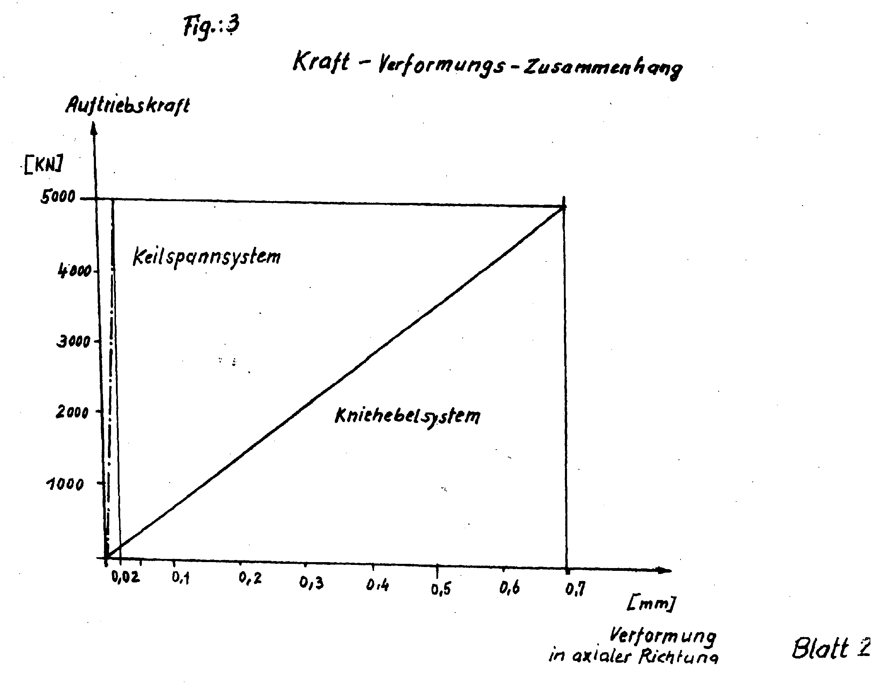

Fig. 3 zeigt ein Kraft- und Verformungsdiagramm für eine Kniehebelmaschine mit Holmen und für eine Schließeinheit mit Spannkeilsystem. Beim S^{p}annkeilsvstem tritt bei maximaler Auftriebskraft eine Verformung von 0,02 mm in axialer Richtung auf. Diese geringe Verformung verhindert eine Gratbildung am Spritzgussteil, ermöglicht aber das Entweichen der Luft aus dem Formhohlraum. Beim Kniehebelsystem mit Holmen würde bei maximaler Auftriebskraft eine unzulässige Verformung von 0,7 mm auftreten, daher muss dieses System mit einer Schließkraft von 5000 KN vorgespannt werden, um eine unzulässige Gratbildung zu vermeiden.

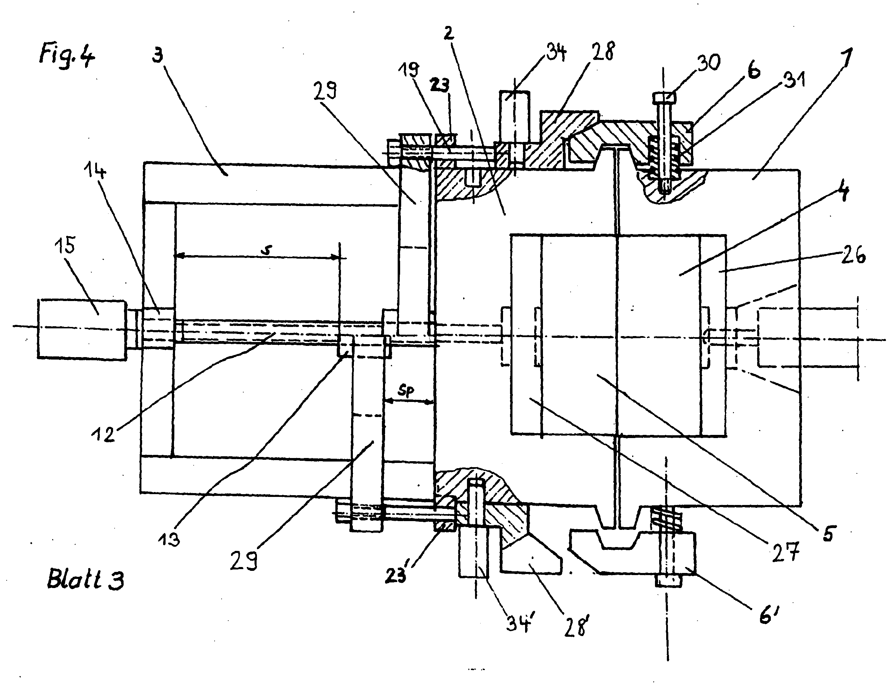

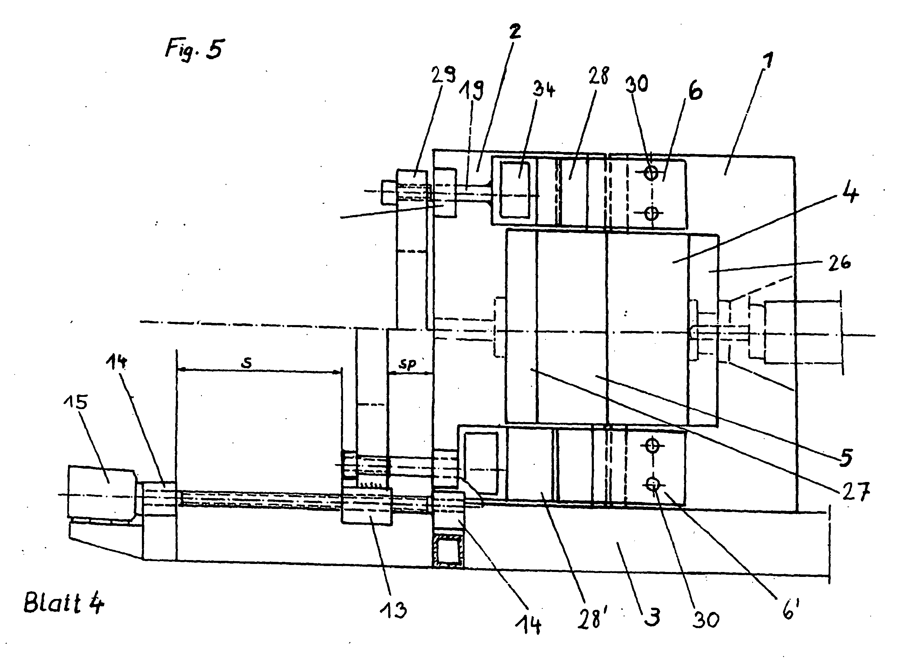

Fig. 4 zeigt den schematischen Aufbau des Grundrisses einer Schließeinheit, bei der die Verriegelung des Spannkeiles 6, 6' durch das Antriebssystem des bewegbaren Werkzeugträgers 2 erfolgt. Fig. 5 zeigt die schematische Ansicht.

Der feststehende Werkzeugträger 1 ist am Maschinenrahmen 3 gelagert. Der Werkzeugträger 1 besteht aus einer Grundplatte mit angegossenen Verlängerungen und Keilflächen. Im Werkzeugträger 1 ist die Werkzeughälfte 4 und eine Werkzeughöhenausgleichsplatte 26 befestigt. Die Ausgleichsplatte 26 korrigiert verschiedene Werkzeughöhen. Der bewegbare Werkzeugträger 2 ist am Maschinenrahmen 3 verschiebbar gelagert, trägt die Werkzeughälfte 5, die Ausgleichplatte 27 und ist ebenfalls mit Keilflächen ausgeführt. Nach dem Schließen der Werkzeughälften 4, 5 werden die Spannkeile 6, 6' mit dem Schieber 11 verschoben und verriegeln über die Keilflächen der Werkzeugträger 1, 2 und dadurch auch die Werkzeughälften 4, 5. Das Spannkeilsystem ist so dimensioniert, dass auch bei maximaler Auftriebskraft nur eine geringe Verformung in axialer Richtung auftritt und daher keine Gratbildung am Spritzgussteil auftritt. Nach der Abkühlphase des Spritzlings wird der Schieber 28 mit der Verschiebeplatte 29 zurückgezogen und der Spannkeil 6, 6' wird freigegeben. Die Spannkeile 6, 6' sind auf den Bolzen 30 geführt und werden durch die Federn 31 verschoben, dadurch wird die Verriegelung der Werkzeugträger 1, 2 aufgehoben. Die Verschiebeplatte 29 wird vom Motor 15 über die Gewindespindel 12 und die Mutter 13 angetrieben. Die Verschiebeplatte 29 führt den Spannhub Sp durch, dann erreicht der Schieber 28, der mittels der Stange 19 mit der Verschiebeplatte 29 verbunden ist, den Anschlag 23 auf dem bewegbaren Werkzeugträger 2 und der bewegbare Werkzeugträger 2 mit der Werkzeughälfte 5 wird geöffnet. Wenn der Schieber 28 die Position am Anschlag 23 erreicht, wird der Schieber 28 mit dem bewegbaren Werkzeugträger 2 über Verbindungselemente 34, 34' verbunden und die Werkzeughälfte 5 um den Öffnungshub s verschoben. Diese Verriegelung bleibt aufrecht bis nach dem Schließhub s die Werkzeughälften 4, 5 geschlossen sind. Dann wird entriegelt und der Schieber 28 mit der Verschiebeplatte 29 um den Spannhub Sp verschoben. Für das Öffnen und Schließen des bewegbaren Werkzeugträgers 2 und das Verriegeln mit den Spannkeilen 6, 6' ist nur ein Antriebsmotor 15 notwendig.

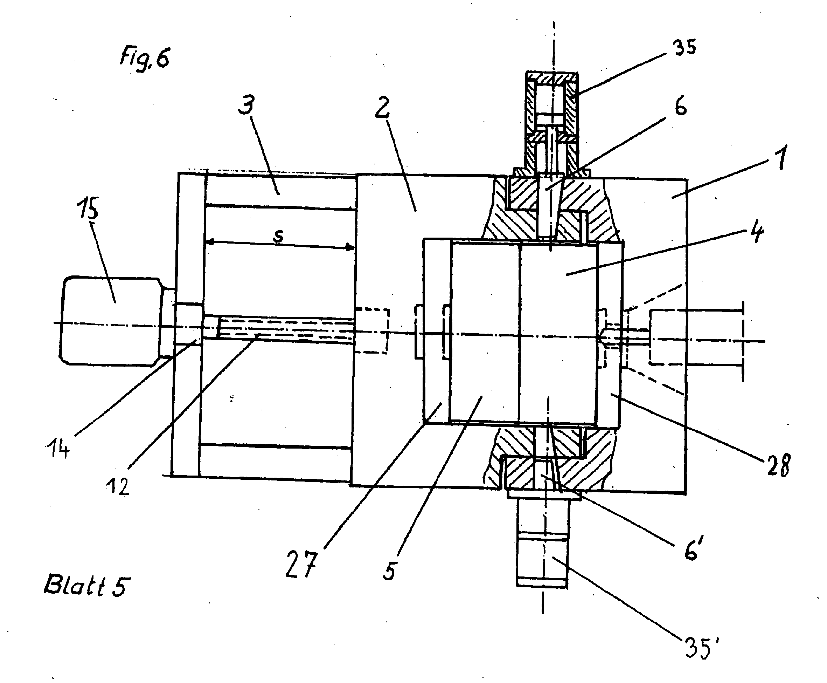

Fig. 6 zeigt den schematischen Aufbau des Grundrisses einer Schließeinheit mit einem Spannkeilsystem in anderer konstruktiver Bauweise. Der feststehende Werkzeugträger 1 ist am Maschinenrahmen 3 gelagert und trägt eine Werkzeughälfte 4 und eine Werkzeughöhenausgleichsplatte 28. Am feststehenden Werkzeugträger 1 ist eine hydraulische Zylinder-Kolbeneinheit 35, 35' befestigt, die zum Verschieben des Spannkeiles 6, 6' dient. Der bewegbare Werkzeugträger 2 mit der Ausgleichsplatte 27 und der Werkzeughälfte 5 wird vom Getriebemotor 15 über die Spindel 12 verschoben. Die Antriebseinheit 15, 12 ist am Rahmen 3 gelagert und ermöglicht das Verschieben des bewegbaren Werkzeugträgers 2 um den maximalen Hub s. Nach dem Schließen der Werkzeughälften 4, 5 wird der Spannkeil 6, 6' mit der Kolben-Zylindereinheit 35, 35' verschoben und verspannt die Werkzeugträger 1, 2 und damit die beiden Werkzeughälften 4, 5 gegeneinander. Nach der Abkühlphase wird der Spannkeil 6, 6' entriegelt und der Öffnungshub eingeleitet.

Das Spannkeil-Schließsystem ist so dimensioniert, dass bei maximaler Auftriebskraft die Dehnung der beanspruchten Maschinenteile in axialer Richtung kleiner 0,1 mm ist und damit eine Gratbildung am Spritzgussteil vermieden wird.

### Bezugszeichenliste:

- 1: feststehender Werkzeugträger
- 2: bewegbarer Werkzeugträger
- 3: Aufspannplatte
- 4: Werkzeughälfte (am feststehenden Werkzeugträger)
- 5: Werkzeughälfte (am bewegbaren Werkzeugträger)
- 6, 6': Spannkeil
- 7: Kolbeneinheit
- 8: Gewindespindel
- 9: verzahnte Mutter
- 10: Sonnenrad
- 11: Motor
- 12: Antriebsspindel
- 13: Mutter
- 14: Lager
- 15: Getriebemotor
- 16: Maschinenrahmen
- 17: Spannarm
- 18: Auswerfer
- 19: Stange
- 23: Anschlag
- 24: Gleitführung
- 26: (Werkzeughöhen-)Ausgleichplatte
- 27: Ausgleichplatte
- 28, 28': Schieber
- 29: Verschiebeplatte
- 30: Bolzen
- 31: Federn
- 34, 34': Verbindungselemente
- 35: Zylinder-Kolben-Einheit
- Sp: Spannhub
- s: Öffnungshub

## Patentansprüche

1. Schließeinheit umfassend
einen am Maschinenrahmen (16) feststehenden Werkzeugträger (1) und einen am Maschinenrahmen (16) geführten bewegbaren Werkzeugträger (2), zwei Werkzeughälften (4, 5) und
zwei Spannkeilsysteme (6, 6, 7, 17), wobei Spannkeile (6, 6') zur Gewährleistung der für den Einspritzvorgang notwendigen Zuhattekraft der Werkzeughälften (4, 5) auf dem feststehenden und dem bewegbaren Werkzeugträger (1, 2) angeordnete Keilflächen umschließen,
**dadurch gekennzeichnet, dass** im bewegbaren Werkzeugträger (2) eine Aufspannplatte (3) verschiebbar eingebaut ist, mit der verschiedene Werkzeughöhen ausgleichbar sind.

2. Schließeinheit nach Anspruch 1, **dadurch gekennzeichnet, dass** für annähernd konstante Werkzeughöhen geringe Differenzen der Werkzeughöhe durch das Spannkeilsystern (6, 6', 7, 17) ausgleichbar sind.

3. Schließeinheit nach Anspruch 1, **dadurch gekennzeichnet, dass** verschiedene Werkzeughöhen durch Ausgleichsplatten (7, 8) ausgleichbar sind.

4. Schließeinheit nach Anspruch 1, **dadurch gekennzeichnet, dass** die Verriegelung der Werkzeugträger (1, 2) durch die Spannkeile (6, 6') mit einem Schieber (28, 28') und einer Verschiebeplatte (29) erfolgt, die von einer Gewindespindel (32) und einem Antriebsmotor (15) für die Schließbewegung des bewegbaren Werkzeugträgers (2) antreibbar sind.

5. Schließeinheit nach Anspruch 4, **dadurch gekennzeichnet, dass** die Verschiebeplatte (29) mit dem bewegbaren Werkzeugträger (2) durch Verbindungselemente (34, 34') gekuppelt wird und nach dem Schließhub die Verbindung lösbar wird und durch den Spannhub (Sp) die Verriegelung der Werkzeugträger (1, 2) erfolgt.

6. Schließeinheit nach Anspruch 1, **dadurch gekennzeichnet, dass** sich die Werkzeugträger (1, 2) überlappen und durch die Spannkeile (6, 6') verriegelbar sind, zum Erreichen der notwendigen Zuhaltekraft.

## Claims

1. A closing unit comprising:
a tool carrier (1) fixed to the machine frame (6) and
a movable tool carrier (2) which is run along the machine frame (16),
two tool halves (4, 5) and
two clamping wedge systems (6, 6', 7, 17), wherein clamping wedges (6, 6') enclose wedge surfaces arranged on the fixed and on the movable tool carrier (1, 2) in order to guarantee the locking force of the tool halves (4, 5) required for the injection process,
**characterised in that** a fixing plate (3) is mounted slidably in the movable tool carrier (2) by means of which different tool heights can be compensated for.

2. A closing unit according to claim 1, **characterised in that** slight differences in the tool height for approximately constant tool heights can be compensated for by the clamping wedge system (6, 6', 7, 17).

3. A closing unit according to claim 1, **characterised in that** different tool heights can be compensated for by adjustment plates (7, 8).

4. A closing unit according to claim 1, **characterised in that** the locking of the tool carriers 1, 2) by the clamping wedges (6, 6') is executed by a slider (28, 28') and a shifting plate (29) which can be driven by a threaded spindle (32) and a drive motor (15) for the closing movement of the movable tool carrier (2).

5. A closing unit according to claim 4, **characterised in that** the shifting plate (29) is coupled with the movable tool carrier (2) by means of connecting elements (34, 34') and the connection is releasable after the closing stroke and the locking of the tool carriers (1, 2) is executed by the clamping stroke (Sp).

6. A closing unit according to claim 1, **characterised in that** the tool carriers (1, 2) overlap one other and are lockable by means of the clamping wedges (6, 6') in order to acquire the required locking force.

## Revendications

1. Unité de fermeture comprenant
un support d'outil (1) fixe sur le cadre de machine (16) et
un support d'outil (2) mobile, guidé sur le cadre de machine (16),
deux moitiés d'outil (4, 5) et
deux systèmes à clavettes de serrage (6, 6', 7, 17), des clavettes de serrage (6, 6') enserrant des surfaces de clavettes disposées sur le support d'outil (1, 2) fixe et le support d'outil mobile pour assurer la force de maintien des moitiés d'outil (4, 5) exigée pour le processus d'injection,
**caractérisée en ce qu'**une plaque de serrage (3) est montée de manière coulissante dans le support d'outil (2) mobile, laquelle permet de compenser des hauteurs d'outil différentes.

2. Unité de fermeture selon la revendication 1, **caractérisée en ce que**, pour des hauteurs d'outil sensiblement constantes, de faibles différences de hauteur d'outil sont compensables par le système à clavettes de serrage (6, 6', 7, 17).

3. Unité de fermeture selon la revendication 1, **caractérisée en ce que** des hauteurs d'outil différentes sont compensables par des plaques de compensation (7, 8).

4. Unité de fermeture selon la revendication 1, **caractérisée en ce que** le verrouillage des supports d'outil (1, 2) par les clavettes de serrage (6, 6') est effectué avec un tiroir (28, 28') et une plaque coulissante (29), qui sont entraînables par un axe fileté (32) et un moteur d'entraînement (15) pour le mouvement de fermeture du support d'outil (2) mobile.

5. Unité de fermeture selon la revendication 4, **caractérisée en ce que** la plaque coulissante (29) est accouplée par des éléments de connexion (34, 34') au support d'outil (2) mobile, **en ce que** la connexion peut être annulée après la course de fermeture, et **en ce que** le verrouillage des supports d'outil (1, 2) est réalisé par la course de serrage (Sp).

6. Unité de fermeture selon la revendication 1, **caractérisée en ce que** les supports d'outil (1, 2) se chevauchent et sont verrouillables par les clavettes de serrage (6, 6') pour obtenir la force de maintien exigée.
